# EUROPEAN PATENT SPECIFICATION

(11) **EP 1 145 871 B1**
(45) Date of publication and mention of the grant of the patent: **28.09.2005**
(21) Application number: 01303444.2
(22) Date of filing: 12.04.2001
(51) Int. Cl.: B60C 1/00, C08K 3/26, B32B 25/00, B60C 9/00

(54) **Tire reinforcing member and reinforced pneumatic tire**
Reifenverstärkungselement und verstärkter Reifen
Elément de renfort de bandage pneumatique et bandage pneumatique renforcé

(30) Priority: 12.04.2000 JP 2000111023
(43) Date of publication of application: 17.10.2001
(73) Proprietor: Bridgestone Corporation, Tokyo (JP)
(72) Inventor: Kaneda, Kazunori, Kodaira-shi, Tokyo (JP)
(74) Representative: Whalley, Kevin

(56) References cited:
- EP-A- 0 965 465
- US-A- 5 979 528
- DATABASE CA [Online] CHEMICAL ABSTRACTS SERVICE, COLUMBUS, OHIO, US; FUKUHARA, NOBUHIKO: "Rubber compositions with antiaging adhesion to steel cords and their composites" retrieved from STN Database accession no. 132:94565 XP002218949 -& JP 2000 017115 A (BRIDGESTONE CORP., JAPAN) 18 January 2000 (2000-01-18)
- PATENT ABSTRACTS OF JAPAN vol. 2000, no. 04, 31 August 2000 (2000-08-31) -& JP 2000 007838 A (BRIDGESTONE CORP), 11 January 2000 (2000-01-11)
- PATENT ABSTRACTS OF JAPAN vol. 006, no. 180 (C-125), 14 September 1982 (1982-09-14) -& JP 57 098532 A (BRIDGESTONE CORP), 18 June 1982 (1982-06-18)
- DATABASE WPI Section Ch, Week 199203 Derwent Publications Ltd., London, GB; Class A12, AN 1992-020231 XP002218950 -& JP 03 268942 A (TOSOH CORP), 29 November 1991 (1991-11-29)

## Description

### BACKGROUND OF THE INVENTION

### 1. Field of the Invention

The present invention relates to a tire reinforcing member and a pneumatic tire reinforced with it, particularly to a tire reinforcing member comprising a laminate member comprising a composite layer and a rubber composition layer, such as a squeegee rubber, laminated on the composite layer, and a pneumatic tire having its endurance improved by the tire reinforcing member.

### 2. Description of the Prior Art

Generally, a pneumatic tire is reinforced with steel cords by constructing, for example, a carcass layer comprising at least one ply, a belt layer comprising at least one ply, or a breaker layer comprising at least one ply made from a rubber composition-steel cord composite member. Also conventionally employed is a so-called squeegee rubber to enhance the fatigue endurance of the cord containing layer by laminating one between the layers or plies, thereby improving the endurance of a pneumatic tire.

Since the adhesion failure between the coating rubber composition and the steel cords in the steel cord-coating rubber composite member because of heat build-up during tire operation causes a fatal tire failure, it has been demanded to further enhance the rubber-to-steel cord adhesion. To meet the demand, the coating rubber composition has been generally compounded with a cobalt salt of organic acid as an adhesion promoter to enhance the adhesion to steel cords.

The coating rubber is surrounded by rubber members of various chemical compositions. During a long-term tire operation, various additive components in the surrounding rubber members migrate into the coating rubber. Some of the migrated components seem to adversely affect the rubber-to-steel cord adhesion. However, this problem has not been sufficiently considered in the prior art.

Japanese Patent Application Laid-Open No. 2000-17115 assigned to the same assignee of this application proposes to deactivate the metal salt of organic acid by compounding a specific water-resistant acid acceptor with a coating rubber which is embedded with steel cords, thereby enhancing the endurance of the rubber-to-steel cord adhesion. However, it turned out that the acid acceptor, when used in larger amounts, also captured sulfur and a vulcanization promoter in the coating rubber composition during the vulcanization, thereby failing to sufficiently improve both the initial adhesion and the resistance to adhesion loss.

### SUMMARY OF THE INVENTION

An object of the present invention, in view of the above problems in the prior art, is to provide a tire reinforcing member capable of greatly improving the endurance of a pneumatic tire by dramatically enhancing the resistance to loss of the steel cord-to-coating rubber adhesion without affecting the initial adhesion, and to provide a pneumatic tire having its endurance improved by the tire reinforcing member.

Accordingly, the present inventions provides a tire reinforcing member comprising:
(a) at least one composite layer (4) comprising a coating rubber composition (2) and steel cords (1), and
(b) at least one squeegee rubber composition layer (3) comprising a rubber composition, which adjoins to the composite layer (4),
wherein a basic inorganic filler is compounded into the squeegee rubber composition.

### BRIEF DESCRIPTION OF THE DRAWINGS

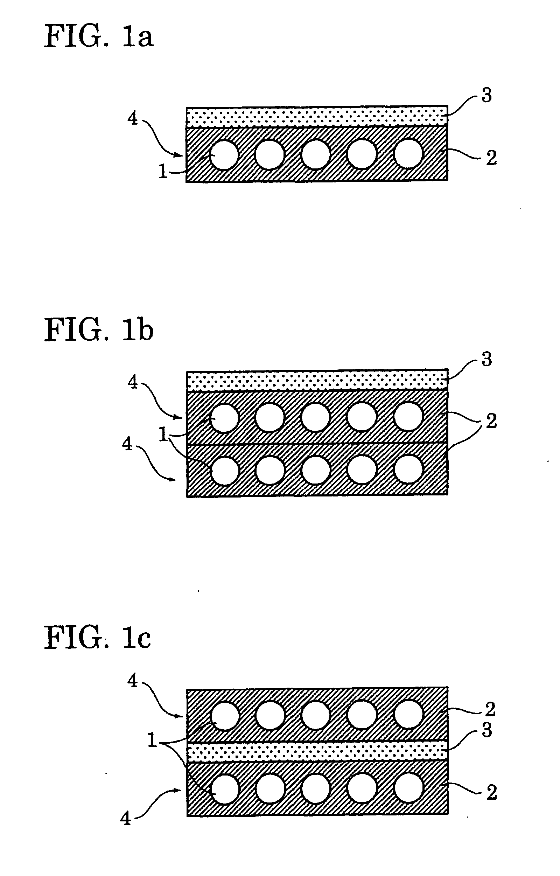

Fig. 1a is a cross sectional view of an embodiment of the tire reinforcing laminate member of the present invention;
Fig. 1b is a cross sectional view of another embodiment of the tire reinforcing laminate member of the present invention; and
Fig. 1c is a cross sectional view of still another embodiment of the tire reinforcing laminate member of the present invention.

### DETAILED DESRIPTION OF THE INVENTION

The tire reinforcing member of the present invention is a laminate member comprising:
(a) at least one composite layer (4) comprising a coating rubber composition (2) and steel cords (1), and
(b) at least one squeegee rubber composition layer (3) comprising a rubber composition, which adjoins to the composite layer (4),
wherein a basic inorganic filler is compounded into the squeegee rubber composition.

The tire reinforcing member of the invention is preferably applied to a truck/bus tire of a large-sized off-road tire. The tire reinforcing member is preferably used for constructing at least one ply of any of the carcass layer, a belt layer or a breaker layer of the tire.

The tire reinforcing laminate member may include only one composite layer, or may include two or more composite layers, which are disposed continuously or separately per every rubber composite layer. Basic structures of the tire reinforcing laminate member of the present invention are shown in Figs. 1a to 1c. In the laminate member of Fig. 1a a squeegee rubber composition layer 3 is disposed on one of the outer surfaces of a composite layer 4 comprising steel cords 1 and a coating rubber composition 2. Alternatively, as shown in Fig. 1b, the laminate member may be constructed by the squeegee rubber composition layer 3 disposed on one of the outer surfaces of a laminate comprising two composite layers 4 which are continuously laminated one on the other. Also a squeegee rubber composition layer 3 may be interposed between two adjacent composite layers 4 as shown in Fig. 1c. Two or more of any of these laminate members may further be laminated.

In the present invention, at least one of the outer most layers of the tire reinforcing laminate member is preferably a squeegee rubber composition layer 3.

The thickness of each layer of the reinforcing member is not particularly limited and selected according to the size and type of the tire to which the member is applied, and can be the same as or different from each other.

It is critical in the present invention to incorporate a basic inorganic filler into at least the squeegee rubber composition.

The basic inorganic filler may include a metal oxide such as MgO, CaO, and Al₂O₃; a metal carbonate such as MgCO₃ and CaCO₃; and a basic composite salt such as talc, kaolin, and hydrotalcite mineral. Of the above basic inorganic fillers, preferred are a hydrotalcite mineral represented by the following Formula I and its calcined product:

[(M₁ ²⁺)₍₁₋ₓ₎(M₂ ³⁺)ₓ(OH⁻)₂]^{x+}·[(Aⁿ⁻)_{x/n}·mH₂O]^{x-} (I)

wherein M₁²⁺ is a divalent metal cation, M₂³⁺ is a trivalent metal cation, An- is an n-valent anion, x is a number satisfying 0 < x ≤ 0.5, and m is zero or a positive number.

More specifically, M₁²⁺ is a divalent metal cation such as Mg²⁺, Mn²⁺, Fe²⁺, Co²⁺, Ni²⁺, Cu²⁺, and Zn²⁺, and Mg²⁺ is particularly preferable. M₂³⁺ is a trivalent metal cation such as Al³⁺, Fe³⁺, Cr³⁺, Co³⁺, and In³⁺. Aⁿ⁻ is an n-valent anion such as OH⁻, F⁻, Cl⁻, Br⁻, NO₃⁻, CO₃²⁻, SO₄²⁻, Fe(CN)₆³⁻, CH₃COO⁻, oxalate ion, and salicylate ion, and CO₃²⁻ is particularly preferable.

The hydrotalcite mineral, for example, Mg_{4.3}Al₂(OH)_{12.6}CO₃·m'H₂O (x is 0.315 in the Formula I) and its calcined product having the crystal water removed are commercially available from Kyowa Chemical Industry, Co., Ltd.

The compounding amount of the basic filler is not particularly limited and can be chosen according to the use.

The basic inorganic filler is compounded into the squeegee rubber composition constituting the rubber composition layer (3) adjoining to the composite layer (4), preferable compounding amount is from 0.1 to 20 parts by weight based on 100 parts by weight of the rubber component of the rubber composition. When the amount is less than 0.1 parts by weight, sufficient improvement may not be obtained on the resistance to adhesion loss caused by, for example, heat generated during the tire operation. An amount exceeding 20 parts by weight is likely to reduce the fracture resistance, fatigue resistance of the vulcanized rubber composition and workability of the unvulcanized rubber composition. More preferred amount of the basic inorganic filler is 0.5 to 10 parts by weight in view of the resistance to adhesion loss, fatigue resistance of the vulcanized rubber composition, and workability of the unvulcanized rubber composition.

On the other hand, when the basic inorganic filler is compounded into the coating rubber composition of the composite layer of the tire reinforcing member, the amount of the basic inorganic filler to be compounded is preferably 0.1 to 5 parts, more preferably 0.1 to 2 parts, by weight based on 100 parts by weight of the rubber component of the coating rubber composition in view of enhancing the endurance of the tire.

The rubber component for the rubber composition of the tire reinforcing member may be natural rubber and/or synthetic rubber. The synthetic rubber usable in the present invention is, for example, butadiene rubber(BR), isoprene rubber(IR), styrene-butadiene rubber (SBR), butyl rubber(IIR), halogenated butyl rubber, which is preferably brominated butyl rubber, p-methylstyrene-functionalized butyl rubber (copolymer of isobutylene and p-halomethylstyrene), ethylene-propylene-diene rubber (EPDM), etc.

Natural rubber and the synthetic rubber recited above may be used alone or in combination of two or more according to the rubber article to which the laminate member is applied and the intended extent of reinforcement. A rubber component containing natural rubber and/or a synthetic isoprene rubber in an amount of 50% by weight or more is preferable in view of a sufficient rubber-to-steel cord adhesion and fracture resistance of the vulcanized rubber composition.

The coating rubber composition may further contain an adhesion promoter commonly used in known adhesive rubber compositions for steel cords. The adhesion promoter is, for example, a metal salt of an organic acid, preferably cobalt salt of an organic acid. The organic acid may be either saturated or unsaturated, and either linear or branched. Examples of the organic acid include a naphthenic acid such as cyclohexanecarboxylic acid and an alkylcyclopentane having a fatty acid residue; a saturated fatty acid such as hexanoic acid, octanoic acid, decanoic acid including branched isomers such as neodecanoic acid, dodecanoic acid, tetradecanoic acid, hexadecanoic acid, and octadecanoic acid; an unsaturated fatty acid such as methacrylic acid, oleic acid, linoleic acid, and linolenic acid; and resin acid such as rosin, tall oil acid, and abietic acid. Metal element of the metal salt of organic acid may be partly replaced with boron, boric acid, or an aluminum-containing compound. The amount of the metal salt of organic acid to be incorporated, in terms of metal element basis, is 0.1 to 0.3 part by weight based on 100 parts by weight of the rubber component. Also, the adhesion promoter may be incorporated into the rubber composition layer adjoining to the steel cord-coating rubber composite layer.

The rubber composition constituting the tire reinforcing member of the present invention usually contains sulfur preferably in an amount of 3 to 8 parts by weight per 100 parts by weight of the rubber component. When the amount of sulfur is less than 3 parts by weight, the rubber-to-steel cord adhesion may become insufficient because the amount of sulfur for the formation of CuₓS (formed by the reaction of sulfur and copper in brass-plating layer of steel cords) which contributes to the rubber-to-steel cord adhesion decreases. The use of an amount exceeding 8 parts by weight may cause excessive formation of CuₓS which may lead to occasional cohesive failure in the thickened CuₓS, thereby reducing the rubber-to-steel cord adhesion. In addition, the heat aging resistance of the rubber composition tends to be reduced.

In addition to the above additives or components, the coating rubber composition and the rubber composition layer adjoining thereto may further contain another compounding additive commonly used in the rubber art in a usual amount.

Such a compounding additive may includes a filler, a plasticizer, a vulcanization accelerator, and an antioxidant. The filler includes carbon black, zinc white, silica, etc. The plasticizer includes aromatic extract oil. Examples of the vulcanization accelerator include a guanidine compound such as diphenylguanizine, a thiazole compound such as mercaptobenzothiazole, a sulfenamide compound such as N,N'-dicyclohexyl-2-benzothiazolylsulfenamide, and a thiuram compound such as tetramethylthiuram disulfide. The antioxidant includes an amine compound such as poly(2,2,4-trimethyl-1,2-dihydroquinoline) and phenyl-α-naphthylamine.

To enhance the adhesion to rubber, steel cords used in the reinforcing member of the present invention are preferably metalized with brass or zinc each optionally containing nickel or cobalt by plating. Brass plating is particularly preferable. To obtain a good and stable adhesion, the Cu content in the brass plating is 75% by weight or less, preferably 55 to 70% by weight. The steel cords may be twisted with no specific limitation in the twist structure.

The tire of the present invention is a pneumatic tire to which the tire reinforcing member described above is applied. The tire member to which the tire reinforcing member is applied is not particularly limited, but preferably it is a carcass ply and/or a belt ply. The tire reinforcing member comprises (a) at least one composite layer (4) of steel cords (1) coated with a coating rubber composition (2) and (b) at least one squeegee rubber composition layer (3) adjoining to the composite layer (4). The tire reinforcing member may have a single composite layer, or two or more composite layers. And preferably, the carcass layer has one or two composite layers, and the belt layer has two to six composite layers.

The pneumatic tire of the present invention is preferably used as a truck/bus tire, or a large-sized off-road tire, for example, a tire for construction vehicle such as dump truck, loader, and scraper, in which the resistance to loss of steel cord-to-rubber adhesion is quite important because of a large tire thickness.

The production of the rubber composition, the steel cord-coating rubber composite, the tire reinforcing member and the pneumatic tire described above requires no specific process which needs undue experimentation, and may be accomplished by methods known to one of ordinary skill in the rubber and tire art.

The pneumatic tire of the present invention may be filled with air or with an inert gas such as nitrogen.

The present invention will be described in further detail by reference to the following examples which are not intended to limit the scope of the present invention thereto.

The initial adhesion and the resistance to adhesion loss of the test tire were evaluated by the following methods.

### (1) Initial Adhesion

A sample was cut out from a carcass ply at shoulder portion of a vulcanized tire. Steel cords in the sample were then pulled out at -90°C. The rubber-coated surface area of the pulled-out steel cords was measured, and an amount of remaining-rubber (%) was expressed by the ratio of the rubber-coated surface to the entire surface of the steel cords. The larger the amount of remaining-rubber, the better the initial steel cord-to-rubber adhesion.

### (2) Resistance to Adhesion Loss

The vulcanized tire was stored for 15 days at 100°C. Then, the amount of remaining-rubber (%) was determined in the same manner as in (1). The larger the amount of remaining-rubber, the better the resistance to adhesion loss.

### EXAMPLES 1-6 and COMPARATIVE EXAMPLES 1-2

An 11R22.5 size truck/bus tire having four belt plies was prepared by a known method. The steel cords (3+9+1 structure with a single cord diameter of 0.23 mm) plated with brass (Cu: 63% by weight, Zn: 37% by weight) were used as the reinforcement for the carcass ply. The carcass ply was made of a tire reinforcing member having one composite layer comprising the steel cords coated with a coating rubber composition and one rubber composition layer (squeegee rubber) adjoining to the composite layer for Examples 1 to 5 and Comparative Example 1 and one composite layer comprising the steel cords coated with a coating rubber composition for Example 6 and Comparative Example 2.

Rubber compositions A to E were used for the coating rubber composition of the composite layer and the rubber composition of the rubber composition layer in the carcass ply of a test tire. The rubber composition A was prepared by compounding 100 parts by weight of natural rubber, 55 parts by weight of carbon black FEF, 1.0 part by weight of a plasticizer, 2.0 parts by weight of cobalt naphthenate, 6 parts by weight of zinc oxide, 2 parts by weight of N-(1,3-dimethylbutyl)-N'-phenyl-p-phenylenediamine (Nocrac 6C, trade name of Ouchi Shinko Kagaku Kogyo Co., Ltd.) as an antioxidant, 5 parts by weight of sulfur, and 0.8 part by weight of N,N'-dicyclohexyl-2-benzothiazolylsulfenamide (Nocceler DZ, trade name of Ouchi Shinko Kagaku Kogyo Co., Ltd.) as a vulcanization accelerator. The formulation of the rubber composition A was used as a basic formulation. By compounding the basic formulation with a predetermined amount of hydrotalcite (KW-2200, trade mark of Kyowa Chemical Industry Co., Ltd.) or MgO as a basic inorganic filler, as shown in Table 1, each of the rubber composition B to E was prepared.

**Table 1**

| Basic Inorganic Filler (part by weight) | Rubber Compositions | | | | |
|---|---|---|---|---|---|
| | A | B | C | D | E |
| Hydrotalcite | - | 0.5 | 5 | 10 | - |
| MgO | - | - | - | - | 1 |

The combination of the coating rubber (composite layer) and the squeegee rubber (rubber composition layer) used in the carcass ply of each test tire is shown in Table 2.

Each test tire thus prepared was examined on the initial adhesion and the resistance to adhesion loss in the manner described above. The results are shown in Table 2.

**Table 2**

| | Examples | | | | | | Comparative Examples | |
|---|---|---|---|---|---|---|---|---|
| | 1 | 2 | 3 | 4 | 5 | 6 | 1 | 2 |
| Carcass Ply coating rubber | A | A | A | A | B | B | A | A |
| squeegee rubber | B | C | D | E | B | none | A | none |
| Initial adhesion (%) | 95 | 95 | 95 | 95 | 90 | 90 | 95 | 95 |
| Resistance to adhesion loss (%) | 40 | 55 | 65 | 45 | 50 | 50 | 10 | 10 |

As seen from Table 2, excellent results in both the initial adhesion and the resistance to adhesion loss were obtained in the tires of the present invention with the carcass ply having the hydrotalcite-compounded rubber composition.

The tire reinforcing member of the present invention greatly enhances the resistance to the loss of the steel cord-to-coating rubber adhesion without lowering the initial steel cord-to-coating rubber adhesion. Therefore, the tire reinforcing member provides a pneumatic tire having an dramatically improved endurance.

## Claims

1. A tire reinforcing member comprising.
(a) at least one composite layer (4) comprising a coating rubber composition (2) and steel cords (1), and
(b) at least one squeegee rubber composition layer (3) comprising a rubber composition, which adjoins to the composite layer (4),
wherein a basic inorganic filler is compounded into the squeegee rubber composition.

2. The tire reinforcing member according to claim 1, wherein the basic inorganic filler is compounded into the squeegee rubber composition layer (3) in an amount of 0.1 to 20 parts by weight based on 100 parts by weight of a rubber component of the squeegee rubber composition.

3. The tire reinforcing member according to claim 1 or 2,
wherein the basic inorganic filler is a hydrotalcite mineral represented by the following Formula I or a calcined product thereof:
[(M₁ ²⁺)₍₁₋ₓ₎(M₂ ³⁺)ₓ(OH⁻)₂]^{x+}·[(Aⁿ⁻)_{x/n}·mH₂O]^{x-} (I)
wherein M₁²⁺ is a divalent metal cation, M₂³⁺ is a trivalent metal cation, Aⁿ⁻ is an n-valent anion, x is a number satisfying an equation: 0 <x ≤ 0.5, and m is zero or a positive number.

4. The tire reinforcing member according to any one of claims 1 to 3,
wherein at least one of the outermost layers of the tire reinforcing member is the squeegee rubber composition layer (3).

5. A pneumatic tire reinforced with the tire reinforcing member as defined in any one of claims 1 to 4.

6. The pneumatic tire according to claim 5, wherein the reinforcing member constitutes at least one of a carcass ply and a belt ply.

7. The pneumatic tire according to claim 5 or 6, which is a large-sized off-road vehicle tire.

## Patentansprüche

1. Reifenverstärkungselement, das folgendes umfasst:
(a) wenigstens eine Verbundschicht (4), die eine Überzugsgummizusammensetzung (2) und Stahlkords (1) umfasst, und
(b) wenigstens eine Laufflächenpolster-Gummizusammensetzungsschicht (3), die eine Gummizusammensetzung umfasst, die an die Verbundschicht (4) anstößt,
wobei ein basischer anorganischer Füllstoff in die Laufflächenpolster-Gummizusammensetzung gemischt wird.

2. Reifenverstärkungselement nach Anspruch 1, wobei der basische anorganische Füllstoff auf der Grundlage von 100 Gewichtsteilen eines Gummibestandteils der Laufflächenpolster-Gummizusammensetzung in einer Menge von 0,1 bis 20 Gewichtsteilen in die Laufflächenpolster-Gummizusammensetzung (3) gemischt wird.

3. Reifenverstärkungselement nach Anspruch 1 oder 2,
wobei der basische anorganische Füllstoff ein Hydrotalcitmineral, das durch die folgende Formel I dargestellt wird oder ein kalziniertes Produkt desselben ist:
[(M₁ ²⁺)₍₁₋ₓ₎(M₂ ³⁺)ₓ(OH⁻)₂]^{x+}·[(Aⁿ⁻)_{x/n} · mH₂O]^{x-} (I),
wobei M₁²⁺ ein zweiwertiges Metallkation ist, M₂³⁺ ein dreiwertiges Metallkation ist, Aⁿ⁻ ein n-wertiges Anion ist, x eine Zahl ist, die eine Gleichung erfüllt: 0<x ≤0,5, und m Null oder eine positive Zahl ist.

4. Reifenverstärkungselement nach einem der Ansprüche 1 bis 3,
wobei wenigstens eine der äußersten Schichten des Reifenverstärkungselements die Laufflächenpolster-Gummizusammensetzung (3) ist.

5. Luftreifen, verstärkt mit dem Reifenverstärkungselement wie in einem der Ansprüche 1 bis 4 definiert.

6. Luftreifen nach Anspruch 5, wobei das Verstärkungselement wenigstens eine der Komponenten Karkassenlage und Gürtellage darstellt.

7. Luftreifen nach Anspruch 5 oder 6, der ein Großformat-Geländefahrzeugreifen ist.

## Revendications

1. Elément de renforcement de bandage pneumatique, comprenant:
(a) au moins une couche composite (4) comprenant une composition de caoutchouc de revêtement (2) et des câblés d'acier (1), et
(b) au moins une couche d'une composition de gomme de liaison entre plis (3) comprenant une composition de caoutchouc, adjacente à la couche composite (4),
une charge inorganique basique étant ajoutée dans la composition de gomme de liaison entre les plis.

2. Elément de renforcement de bandage pneumatique selon la revendication 1, dans lequel la charge inorganique basique est ajutée dans la couche de la composition de gomme de liaison entre plis (3) dans une quantité représentant 0,1 à 20 parties en poids sur la base de 100 parties en poids d'un composant de caoutchouc de la composition de gomme de liaison entre plis.

3. Elément de renforcement de bandage pneumatique selon les revendications 1 ou 2,
dans lequel la charge inorganique basique est une hydrotalcite minérale représentée par la formule I ci-dessous ou un produit calciné correspondant:
[(M₁ ²⁺)₍₁₋ₓ₎(M₂ ³⁺)ₓ (OH⁻)₂]^{x+}·[(Aⁿ⁻)_{x/n}·mH₂O]^{x-} (I)
où M₁²⁺ est un cation métallique bivalent, M₂³⁺ étant un cation métallique trivalent, Aⁿ⁻ étant un anion n-valent, x étant un nombre satisfaisant la relation 0<x ≤0,5 et m étant égal à zéro ou à un nombre positif.

4. Elément de renforcement de bandage pneumatique selon l'une quelconque des revendications 1 à 3,
dans lequel au moins une des couches externes extrêmes de l'élément de renforcement du bandage pneumatique est constituée par la couche de composition de gomme de liaison entre plis (3).

5. Bandage pneumatique renforcé par l'élément de renforcement du bandage pneumatique selon l'une quelconque des revendications 1 à 4.

6. Bandage pneumatique selon la revendication 5, dans lequel l'élément de renforcement constitue au moins une nappe de carcasse ou une nappe de ceinture.

7. Bandage pneumatique selon les revendications 5 ou 6, constitué par un bandage pneumatique tout terrain de grande taille.
